# EUROPEAN PATENT APPLICATION

(11) **EP 1 081 397 A1**
(43) Date of publication of application: **07.03.2001**
(21) Application number: 99116809.7
(22) Date of filing: 01.09.1999
(51) Int. Cl.: F16C 1/22, F16C 1/14

(54) **Adjustment and assembly system for mechanical remote controls by cable**

(71) Applicant: PAPARONI, Paolo, 04533-050-Sao Paulo, SP (BR)
(72) Inventor: PAPARONI, Paolo, 04533-050-Sao Paulo, SP (BR)
(74) Representative: Modiano, Guido, Dr.-Ing.

(57) **Abstract**

Adjustment and assembly system for mechanical remote controls by cable, in which the transmission of the controls between a mechanical transmission element and a mechanical receiving element is effected by means of a flexible transmission cable, and in which the adjustment of the system is achieved by adjusting the length of the transmission cable, whereby adjustment and assembly are effected simultaneously by means of a serrated pin (20), which fits into a corresponding serrated profile (25) found on the inside edges of an oblong hole situated at the end of one of the two aforementioned elements, so that said pin is automatically situated in the best position for adjustment in relation to said oblong hole, thereby facilitating assembly.

## Description

The subject-matter of the present invention is an adjustment and assembly system for mechanical remote controls by cable, in which the transmission of the movements and the control forces between the mechanical transmission element and the mechanical receiving element is effected by means of a transmission cable, and in particular a system in which said adjustment and assembly are effected simultaneously by means of a serrated pin situated at one end of said cable, which fits into a corresponding serrated profile found on the inside edges of an oblong hole situated at the end of one of the mechanical elements connected by means of the cable, so that the pin is automatically in the best position for adjustment in relation to said oblong hole, thereby facilitating assembly.

As is widely known, when a control movement is to be transmitted with a certain force between mechanical elements that are separated or situated apart, a flexible cable is commonly used in the art for this purpose, in order to accurately transmit movements and control forces, even over difficult paths.

In the mechanical industry there are many examples of the use of cables for transmitting remote controls, especially in cases where the transmission of vibrations through the control is to be reduced to a minimum. In the automobile industry, cables are traditionally used to transmit to the engine the controls of the accelerator and clutch pedals, and in order to transmit the controls of the gear lever to the gearbox in cases where these two elements are situated apart, as is the case when the engine is placed transversally to the longitudinal axle of the vehicle.

A "push-pull" type transmission cable, which makes it possible to transmit backwards and forwards movements in both directions, consists of a specially manufactured flexible internal cable which makes it possible to transmit traction and compression forces, and a flexible external case or sheath in which the cable slides with a minimum amount of clearance. The constancy of the linear dimension of the two elements along the cable axis determines the precision of the transmission of the movements.

Normally, the two ends of the internal cable have terminals which permit the articulated connection to the element which transmits the movement and the element which receives the same, and the two ends of the external case have means for attaching them to the supports of the respective elements.

Thanks to their structure and as a result of strain and ageing of the materials owing to changes in temperature, the internal cable and the external case undergo slight plastic deformations, which alter the length of the elements. Further, the relative distance between the mechanical elements connected by the cable is subject to the effects of the tolerances of the whole chain of components and supports which exist between the elements and therefore it cannot be predetermined accurately.

The effects of the above-mentioned factors require the presence of a system which makes it possible to adjust the length of the cable when it is assembled and during the whole of its useful life, in order to compensate for the variations in length during use.

For this purpose, transmission cables of adjustable length are used and their adjustment system usually consists of a male and female screw system with a check-nut, situated at the end of the cable. Adjustment is made by screwing or unscrewing the cable terminal and then setting it in the adjusted position by tightening the check-nut.

Apart from the fact that the aforementioned adjustment elements are more expensive, this type of adjustment causes difficulties owing to the fact that it often has to be made in places that are not very accessible. When this happens, the adjusting of the screw and in particular the tightening of the check-nut, which requires the use of two tools at the same time and the use of both hands of the person making the adjustment in the limited space available, means that the adjustment process is fairly complex, slow and inaccurate.

The safety of the operation is also uncertain at times, as it is difficult to guarantee that the check-nut is tightened to the right extent.

There is thus a need to develop a system for adjusting the length of cables in order to be able to connect them quickly and accurately to the respective mechanical elements and such system must also prevent the possible loosening of said connections.

The solution presented herein is a system in which the adjustment is made by means of a serrated pin assembled at the end of the cable, which fits into the corresponding serrated profile arranged on the inside edges of an oblong hole situated at the end of one of the mechanical elements connected by means of the cable.

During assembly, when the mechanical element which transmits the control and the mechanical element which receives same are installed, with the transmission cable already attached to one of the two elements, the serrated pin which is attached to the end of the cable that is still free is automatically positioned near the serrated oblong hole of the mechanical element inside of which said serrated pin is to be assembled, in a position which, owing to the size of the hole, always comes within the length of the serrated part of said oblong hole. This position is the natural adjustment position which the materials adopt if no strain is applied.

This makes it extremely easy for the assembler to fit the serrated pin into the oblong hole of the element to be connected with only one hand, thereby invariably obtaining the correct adjustment position between said mechanical elements. The tightening of the nut which blocks the serrated pin inside the element is also made easier, as the serrated pin fits into the serrated oblong hole and therefore it cannot turn, meaning that only one tool is needed to tighten the nut and therefore it can be done with only one hand.

In short, the main characteristics of the system which is the subject of this invention are the following:
- it allows the system to be adjusted and assembled using only one hand and one tool;
- adjustment is extremely quick, because once the mechanical elements to be connected have been positioned, it is only necessary to fit the pin into the serrated hole;
- the spacing in the serration of the pin and of the oblong hole can be smaller than the acceptable position error;
- the use of this system does not exclude the possibility of including a fine adjustment system where necessary.

The advantages of this system in relation to the old system, i.e. the usual screw adjustment system, are obvious.

Adjustment is automatic and is carried out during assembly. The fitting together of the serrated edges removes the risk of loosening and the consequent appearance of clearance and loss of adjustment, which is common with screw adjustments when subjected to vibrations. The tightening of the nut of the serrated pin only requires one screwdriver and the torque can be controlled more easily by the operator, who only needs one hand to assemble and tighten the nut.

As well as the advantages mentioned above, the present invention makes it possible to use simple cables, without the screw adjustment system. Simple cables are more compact and quite a lot more economic. Furthermore, the extra cost of the serrated pin and the hole owing to the extra serrated profile is insignificant.

The result is greater ease, speed and safety when assembling and adjusting the system, which therefore involves a considerable reduction in cost. One of the most useful results in practical terms is that the system makes it possible to make adjustments in confined spaces, with a higher level of safety than with previous systems.

Further characteristics, aims and advantages of the system according to the present invention will become apparent from the detailed description of the accompanying drawings, which illustrate only by way of non-limitative example the realisation of an assembly and adjustment system for the transmission of controls by cable, wherein:
Figure 1 illustrates a system for the transmission of controls by cable between two mechanical elements, showing the system that is usually used for adjusting the length of the cable;
Figure 2 is a view from above of the end of the mechanical receiving element shown in Figure 1;
Figure 3 illustrates the transmission system shown in Figure 1, applying thereto the new system described in this invention for adjusting and assembling the transmission cable;
Figure 4 is a view from above of the end of the mechanical receiving element shown in Figure 3, in accordance with the present invention;
Figure 5 is an exploded view of the various components of the knuckle joint between the terminal of the transmission cable and the element which receives the movement, showing in detail the adjustment and assembly elements that are characteristic of the present invention;
Figure 6 is a view of the end of the element which receives the movement in accordance with view I - I of Figure 5, showing in detail the serrated oblong hole which is one of the characteristic parts of the present invention.

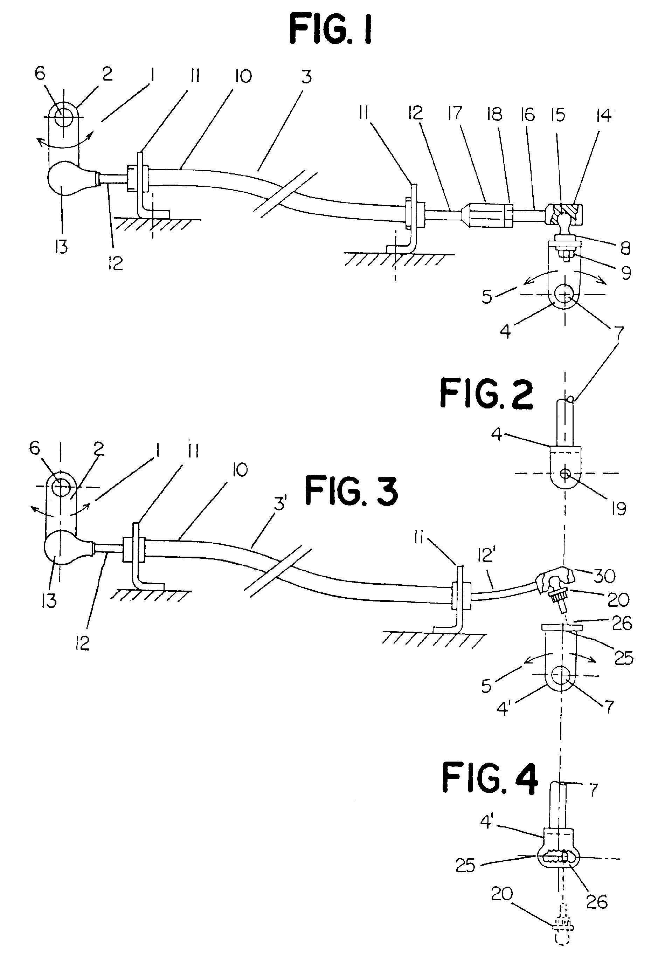

Referring more specifically to the drawings, Figure 1 shows how a rotary movement of control 1 of the mechanical transmission element 2 can be transmitted through the whole of the transmission cable 3 to the mechanical receiving element 4, causing therein a rotation 5.

In the example shown in Figure 1, the mechanical transmission element 2 is an arm joined to an axle 6, and the mechanical receiving element 4 is an arm bent in the form of a corner piece joined to the axle 7. It should be noted that the rotation planes of said elements 2 and 4 can have a different spatial positioning and not just the positioning shown in Figures 1 and 3.

On the flange of the corner piece, i.e. at the top end of the arm 4, a hole 19 receives the pivot pin 8 which has a threaded rod that enters said hole and is attached to the arm 4 by means of the nut 9.

The transmission cable 3 represented in Figure 1 is of the adjustable type and consists of an external flexible case or sheath 10, the ends of which are attached to the equipment by means of the supports 11, and of an internal flexible cable 12 at the ends of which are attached the terminals 13 and 14, which articulate at the ends of the element which transmits the control 2 and the element which receives same 4 respectively.

In order to make it possible to adjust the length of the internal cable 12, one of the terminals, which in this case is terminal 14, has an adjustment system consisting of a threaded rod 16 which is screwed inside a threaded bushing 17 joined to the end of the internal cable 12. A check-nut 18 is tightened at the end of the adjustment process against the threaded bushing 17 in order to set the adjusted length.

The two ends of the transmission cable 12 are allowed to rotate and oscillate freely in relation to the transmission element 2 and the receiving element 4 by means of the articulations of the terminals 13 and 14, which in the illustrated embodiment both consist of a link pin 8 with a spherical head which is attached to the respective element 2 or 4, and a spherical base 15 which forms an integral part of the respective terminal 13 or 14. It should also be noted that the articulations could be different, for example articulation 13 could consist of a cylindrical pin.

The system is adjusted by placing the transmission element 2 and the receiving element 4 in the respective neutral positions, which in the case of Figures 1 and 3 are the central positions of the elements as shown, and then adjusting the length of the cable 12. This adjustment is normally made by screwing or unscrewing the threaded rod 16 of the terminal 14 inside the threaded bushing 17 which is joined to the cable 12, until the threaded rod of the link pin 8 freely enters the hole 19 existing at the end of the element 4. The check-nut 18 is then tightened against the threaded bushing 17 in order to set the adjustment made.

Once the length of the internal cable 12 has been adjusted, the pin 8 is fixed to the receiving element or arm 4 by inserting the threaded bushing of the pin into the hole 19, and then positioning and tightening the nut 9.

It should be noted that for the above described adjustment a certain amount of time is required in order to obtain the right length for the cable and some more time to tighten the check-nut 18 against the threaded bushing 17. This tightening requires two screwdrivers which are turned in opposite directions. In order to tighten the nut 9 of the pin 8 it is also necessary to use two screwdrivers because, before it is tightened, said pin moves freely inside the hole 19 and inside the spherical base 15. All the adjustment operations described above require the action of both hands of the person making the adjustment.

The system according to the present invention, as illustrated in Figures 3 to 6, removes the above-mentioned adjustment and assembly problems. Figure 3 shows the transmission cable 3' with the internal cable 12', which this time is of the simple, fixed length type. The transmission element 2 and the terminal 13 with its articulation remain unchanged, but the previous receiving arm 4 and pin 8 are replaced with the new receiving element 4' and the new pin 20 respectively.

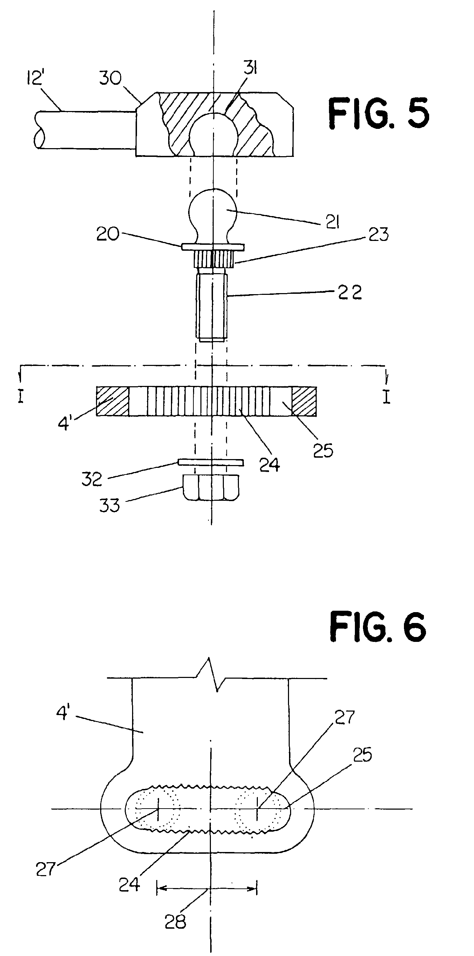

Figures 3 and 4 illustrate the terminal 30 together with the new pin 20 fitted inside same, while being fitted to the new receiving element or arm 4'. It can be seem that when the transmission element 2 and the receiving element 4' are in their central or neutral positions, the cable 12', when left free, will position itself naturally with its pin 20 at any point 26 along the length of the oblong hole 25, which is situated in the place of the previous hole 19.

In the details illustrated in Figures 5 and 6, which are characteristics of the present invention, it can be seem that the new pin 20, as well as the sphere 21 and the threaded part 22 which are also located in the previous pin 8, also has a serrated circular part 23 whose serration fits into the corresponding serrated part 24 of the internal surface of the oblong hole 25, situated at the end of the new receiving element 4'.

The serrated circular part 23 of the new pin 20 can be fitted into any point of the serrated part 24 of the oblong hole 25. Figure 6 indicates by means of dotted lines the extreme positions 27 where the pin 20 can be placed, and the distance between the two extreme points 27 represents the useful length 28 of the serrated part 24.

The correct point where the pin 20 fits into the hole 25 depends on the differences which occur during each assembly operation between the length of the transmission cable 3' and the corresponding assembly distance of the devices where the element which transmits the control 2 and the element which receives same 4' are assembled. The useful length 28 of the serrated part 24 is designed to be greater than the greatest differences in length that are found in practice.

In the example illustrated in Figures 3 and 4, during assembly the devices comprising the transmission element 2 and the receiving element 4' are assembled first of all, with the transmission cable 3' already assembled on the transmission element 2, and then said elements are placed in the respective neutral positions. Thus, the internal cable 12' will naturally be positioned so that its terminal 30 is situated close to the end of the receiving arm 4'.

The pin 20, already fitted into the terminal 30, will also remain close to the oblong hole 25, in a position and at a distance corresponding to the neutral position of the receiving element 4', which makes it possible to fit the serrated parts 23 and 24 directly into each other in the correctly adjusted position.

It is therefore easy for the assembler to join with only one hand the terminal 30 of the internal cable 12' to the end of the receiving arm or element 4' in the correctly adjusted position. Since the serrated pin 20 is prevented from turning, as the serrated edges fit together, it is also easy for the assembler to place the washer 32 and the check-nut 33 into the threaded part 22 of the serrated pin 20 and to tighten said nut with only one screwdriver, always using only one hand. This ease of manoeuvring greatly simplifies installation in confined spaces with difficult access.

The safety of the system presented herein is guaranteed by the fact that, because the serrated edges fit together, there is no possibility of loosening or loss of adjustment along the length of the cable, which is a danger that is present in the traditional system of adjustment using screws.

The adjustment system described in the present invention makes it possible to use transmission cables of a fixed length, which are simpler, more economic and safer. Figure 5 shows how the end of the internal cable 12' is fixed directly to the terminal 30. In the spherical articulation shown in this example, the spherical head 21 of the new serrated pin 20 is fitted inside the spherical base 31, which is joined to the terminal 30.

What has been stated above demonstrates that the new characteristics of the present invention greatly facilitate assembly and adjustment in any system for the mechanical transmission of controls by cable, especially in cases when it is difficult to gain access to the elements connected by the cable, they provide greater safety when the control system is in operation and they considerably reduce operation time and the cost of labour and materials.

The present invention is susceptible of numerous modifications and variations, provided that they are within the scope of the invention as described in the claims hereunder.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Adjustment and assembly system for mechanical remote controls by cable, in which the transmission of the controls between a mechanical transmission element and a mechanical receiving element is effected by means of a flexible transmission cable, and in which the adjustment of the system is achieved by adjusting the length of the transmission cable, characterised in that the pin (20) of the terminal (30) of the transmission cable (3') has a serrated circular part (23) situated between the articulated head (21) and the threaded rod (22) of the pin (20), which fits inside a corresponding serrated oblong hole (25) found at the end of the mechanical element (4'), so that when the system is assembled, the pin (20) can be fixed to the end of the mechanical element (4') at the most suitable point along the length of the transmission cable (3').

2. The adjustment and assembly system for mechanical remote controls by cable according to claim 1, characterised in that the useful length (28) of the serrated oblong hole (25) found at the end of the mechanical element (4') is greater than the variation of the distance between the mechanical elements which transmit (2) and receive (4') the control, caused by the sum of the manufacturing, assembly and installation tolerances existing in the system.

3. The adjustment and assembly system for mechanical remote controls by cable according to claims 1 and 2, characterised in that the adjustment of the length of the internal transmission cable (12') is made automatically when the pin (20), together with the terminal (30), is fitted to the mechanical element (4'), because before being connected to the element (4'), the pin (20) will naturally be maintained by the internal cable (12') in a position which will always come within the useful length (28) of the oblong hole (25).

4. The adjustment and assembly system for mechanical remote controls by cable according to claim 1, characterised in that the spacing in the serration of the serrated part (23) of the pin (20), as well as that of the serrated part (24) of the oblong hole (25), is smaller than the acceptable position error between the positions of the transmission element (2) and the receiving element (4').
